# EUROPEAN PATENT APPLICATION

(11) **EP 4 176 742 A1**
(43) Date of publication of application: **10.05.2023**
(21) Application number: 21833684.0
(22) Date of filing: 01.07.2021
(51) Int. Cl.: A24F 40/465, A24F 40/40, A24F 40/70, A24F 40/50

(54) **ELECTROMAGNETIC INDUCTION HEATING ELEMENT AND ELECTROMAGNETIC INDUCTION HEATING ELEMENT ASSEMBLY**

(30) Priority: 03.07.2020 CN 202010629554
(71) Applicant: Shenzhen Smoore Technology Limited, Shenzhen, Guangdong 518102 (CN)
(72) Inventor: ZHOU, Hongming, Shenzhen, Guangdong 518102 (CN); XIAO, Junjie, Shenzhen, Guangdong 518102 (CN); LIU, Taowen, Shenzhen, Guangdong 518102 (CN); JIANG, Lusheng, Shenzhen, Guangdong 518102 (CN)
(74) Representative: Manitz Finsterwald Patent- und Rechtsanwaltspartnerschaft mbB
(86) International application number: PCT/CN2021/103948
(87) International publication number: WO 2022/002187

(57) **Abstract**

An electromagnetic induction heating element (10) and an electromagnetic induction heating element assembly. The electromagnetic induction heating element (10) comprises a substrate (110), an insulating layer (120) located on the substrate (110), and a temperature sensing layer (130) located on the insulating layer (120). The material of the substrate (110) is a metal simple substance or alloy, and the temperature sensing layer (130) comprises a temperature measuring line (131) formed by sintering a resistance paste. Moreover, a method for preparing an electromagnetic induction heating element is provided.

## Description

### CROSS-REFERENCE TO RELATED APPLICATIONS

This application claims priority to Chinese Patent Application No. 2020106295543, filed with the China National Intellectual Property Administration on July 3, 2020 and entitled "ELECTROMAGNETIC INDUCTION HEATING ELEMENT AND ELECTROMAGNETIC INDUCTION HEATING ELEMENT ASSEMBLY", which is incorporated herein by reference in its entirety.

### TECHNICAL FIELD

This application relates to field of electronic vaporizer technologies, and in particular, to an electromagnetic induction heating element and an electromagnetic induction heating element component.

### BACKGROUND

A conventional atomizing medium produces aerosol by burning, which volatilizes a lot of harmful substances baked under the high temperature of more than 800°C. In order to meet people's demand for nicotine and reduce the harm caused by burning the atomizing medium, a heat-not-burn aerosol forming apparatus (electronic vaporizer device) came into being. The heat-not-burn electronic vaporizer device is mainly to bake the atomizing medium at a low temperature under a condition of 200°C to 400°C, so that the atomizing medium produces aerosol without producing a large amount of harmful substances.

The current heat-not-burn electronic vaporizer device heats the atomizing medium through a heating element, and the heating element mainly generates heat through a resistance circuit. However, a heat source of this heating method is concentrated on the resistance circuit of the heating element, so that the temperature distribution on a surface of the heating element is uneven and it is easy to make the uniformity of baking of the atomizing medium insufficient, resulting in a poor taste.

In order to resolve the problem of uneven temperature on the surface of the heating element, the heating element using electromagnetic induction to generate heat appears, however, the heating element using electromagnetic induction to generate heat is difficult to detect the temperature on the heating element accurately and timely when an induction coil is energized.

### SUMMARY

According to embodiments of this application, an electromagnetic induction heating element and an electromagnetic induction heating element component are provided.

An electromagnetic induction heating element is provided, including a substrate, an insulating layer arranged on the substrate, and a temperature sensing layer arranged on the insulating layer. A material of the substrate is metal elementary substance or alloy, and the temperature sensing layer includes a temperature measuring circuit formed by sintering resistance slurry.

The foregoing electromagnetic induction heating element includes the substrate, the insulating layer, and the temperature sensing layer, where the insulating layer is arranged on the substrate, and the temperature measuring layer is arranged on the insulating layer. The substrate induces a magnetic field under the action of a coil to generate an eddy current and generate heat, the temperature measuring circuit is insulated from the substrate by the insulating layer, and the temperature measuring circuit and a heating current are independent of each other. A conventional heating element generates heat by resistance, which requires supplying a high current to a heating circuit and detecting a feedback current simultaneously, which has a large error. Compared with the conventional heating element, a circuit for testing the temperature and a circuit for heating of the foregoing electromagnetic induction heating element are set independently of each other to avoid mutual interference, and the temperature measuring circuit only needs a low current to form a current loop, which can accurately and timely reflect the temperature on the heating element.

In one of the embodiments, a sintering temperature of the temperature measuring circuit ranges from 700°C to 900°C.

In one of the embodiments, a sheet resistance of the temperature measuring circuit ranges from 1 Ω/sq to 5 Ω/sq, and a temperature coefficient of resistance of the temperature measuring circuit ranges from 300 ppm/°C to 3500 ppm/°C.

In one of the embodiments, a material of the substrate is stainless steel.

In one of the embodiments, the insulating layer is a glass glaze layer with an expansion coefficient ranging from 9×10⁻⁶(1/K) to 13×10⁻⁶(1/K).

In one of the embodiments, the electromagnetic induction heating element further includes a protective layer arranged on the temperature sensing layer.

In one of the embodiments, the substrate has a first surface and a second surface opposite to the first surface, the insulating layer includes a first insulating layer and a second insulating layer, and the protective layer includes a first protective layer and a second protective layer. The first insulating layer, the temperature sensing layer, and the first protective layer are sequentially stacked on the first surface, and the second insulating layer and the second protective layer are sequentially stacked on the second surface.

In one of the embodiments, a thickness of the substrate ranges from 0.1 mm to 1 mm. In one of the embodiments, a thickness of the insulating layer ranges from 10 µm to 300 µm. In one of the embodiments, a thickness of the temperature sensing layer ranges from 10 µm to 300 µm.

In one of the embodiments, the substrate is in a shape of a sheet, a strip, a tube, a column, or a cone.

In one of the embodiments, in parts by mass, the resistance slurry includes 10 to 20 parts of organic carrier, 30 to 45 parts of inorganic adhesive, and 30 to 50 parts of conductive agent, where the inorganic adhesive includes glass powder, and the conductive agent is selected from at least one of silver and palladium.

In one of the embodiments, the conductive agent is a mixture of the silver and the palladium, where a mass ratio of the silver to the palladium is (0.1 to 1): (99.9 to 99)

In one of the embodiments, the inorganic adhesive includes glass powder with a melting point ranging from 700°C to 780°C; and in mass percentage, the glass powder includes 20% to 35% of SiO₂, 1% to 10% of Al₂O₃, 5% to 15% of CaO, 10% to 20% of BaO, 1% to 15% of ZnO, 25% to 40% of B₂O₃, and 1% to 10% of TiO₂.

In one of the embodiments, the organic carrier is selected from at least one of terpineol, ethylcellulose, butyl carbitol, polyvinyl butyral, tributyl citrate, and polyamide wax.

In one of the embodiments, in parts by mass, the parts of the organic carrier range from 15 to 20, the parts of the inorganic adhesive range from 35 to 45, and the parts of the conductive agent range from 40 to 50.

An electromagnetic induction heating element component is provided, including the foregoing electromagnetic induction heating element and a coil surrounding the electromagnetic induction heating element for generating a magnetic field, where the substrate of the electromagnetic induction heating element is configured to induce the magnetic field and generate an electric current.

A method for preparing an electromagnetic induction heating element is provided, including:
printing insulating layer slurry, resistance slurry, and protective layer slurry on a substrate sequentially to prepare a green body of the electromagnetic induction heating element; and
sintering the green body of the electromagnetic induction heating element to prepare the electromagnetic induction heating element.

### BRIEF DESCRIPTION OF THE DRAWINGS

The above and other objectives, features, and advantages of this application will become more apparent from a more detailed description of the preferred embodiments of this application shown in the accompanying drawings. The same reference numerals refer to the same parts throughout the drawings, and the accompanying drawings are not intentionally drawn to scale, and a focus is demonstrating the main idea of this application.
FIG. 1 is an electromagnetic induction heating element according to an embodiment.
FIG. 2 is a cross-sectional view of the electromagnetic induction heating element shown in FIG. 1.
FIG. 3 is an exploded view of the electromagnetic induction heating element shown in FIG. 1.
FIG. 4 is a cross-sectional view of an electromagnetic induction heating element according to another embodiment.
FIG. 5 is a flowchart of a method for preparing an electromagnetic induction heating element according to an embodiment.
FIG. 6 is a cross-sectional view of an electromagnetic induction heating element component of the electromagnetic induction heating element shown in FIG. 1.
FIG. 7 is a graph of a time-temperature curve of Embodiment 1.

### DETAILED DESCRIPTION

For convenience of understanding this application, the following describes this application more fully. However, this application may be implemented in many different forms, and is not limited to the embodiments described in this specification. On the contrary, the embodiments are provided to make the disclosed content of this application clearer and more comprehensive.

It should be noted that, orientation or position relationships indicated by terms such as "vertical", "horizontal", "left", "right", "upper", "lower", "inner", "outer", and "bottom" are based on orientation or position relationships shown in the accompanying drawings, and are used only for ease of description, rather than indicating or implying that the mentioned apparatus or element must have a particular orientation or must be constructed and operated in a particular orientation. Therefore, such terms should not be construed as a limitation to this application. In addition, terms "first" and "second" are merely used for description and should not be understood as indicating or implying relative importance.

Unless otherwise defined, meanings of all technical and scientific terms used in this specification are the same as those usually understood by a person skilled in the art to which this application belongs. In this specification, terms used in the specification of this application are merely intended to describe objectives of specific embodiments, but are not intended to limit this application.

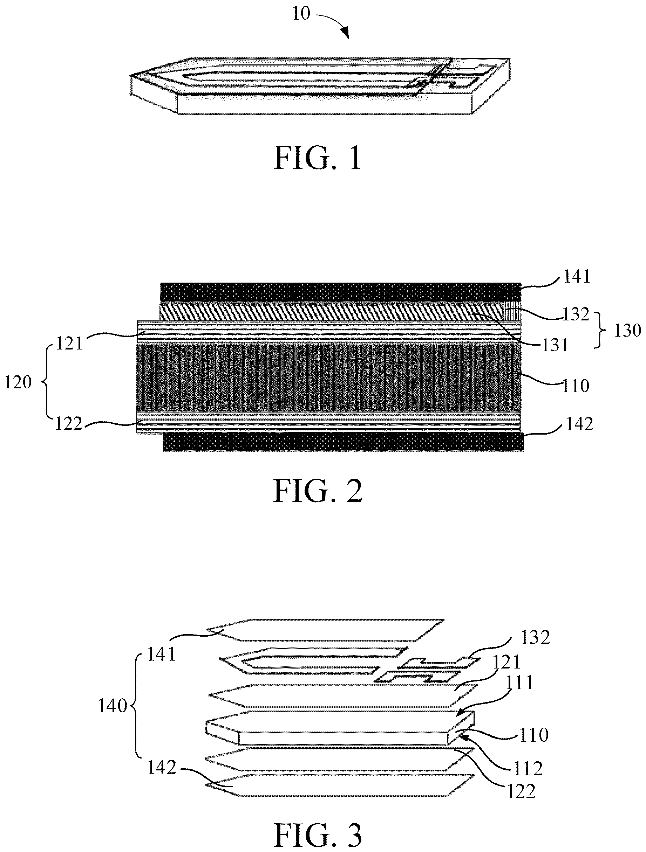

Referring to FIG. 1 to FIG. 3, an embodiment of this application provides an electromagnetic induction heating element 10. The electromagnetic induction heating element 10 generates heat using electromagnetic induction, it includes a substrate 110, an insulating layer 120, and a temperature sensing layer 130.

The substrate 110 is configured to carry the insulating layer 120 and the temperature sensing layer 130. In an embodiment, a material of the substrate 110 is metal or alloy. Through the action of the substrate 110 and a coil, the substrate 110 induces a magnetic field generated by the energized coil to generate an eddy current and generate heat. In this embodiment, the material of the substrate 110 is stainless steel. Specifically, the material of the substrate 110 is 430 stainless steel. Certainly, in other embodiments, the material of the substrate 110 is not limited to the stainless steel, and may also be another material that can use electromagnetic induction to generate heat, for example, aluminum, nickel, or cobalt.

In one of the embodiments, the substrate 110 is in a shape of a sheet, a strip, a tube, a column, or a cone. Certainly, in other embodiments, the shape of the substrate 110 is not limited to the foregoing, and may also be other shapes. In some embodiments, the substrate 110 has a body and a tip portion connected the body, and a width of the tip portion gradually decreases from an end close to the body to an end away from the body, so as to facilitate removal and insertion of an atomizing medium.

In an embodiment shown in FIG. 1, the substrate 110 is in the shape of a sheet. An orthogonal projection of the body on a horizontal plane is a rectangle, and an orthogonal projection of the tip portion on the horizontal plane is an isosceles triangle, where a base of the isosceles triangle is a short side of the rectangle. When the substrate 110 is in the shape of a sheet, the electromagnetic induction heating element 10 is also substantially in a shape of a sheet. In use, the atomizing medium is inserted into the electromagnetic induction heating element 10, the coil surrounds the outside of the atomizing medium, and the atomizing medium is arranged between the electromagnetic induction heating element 10 and the coil.

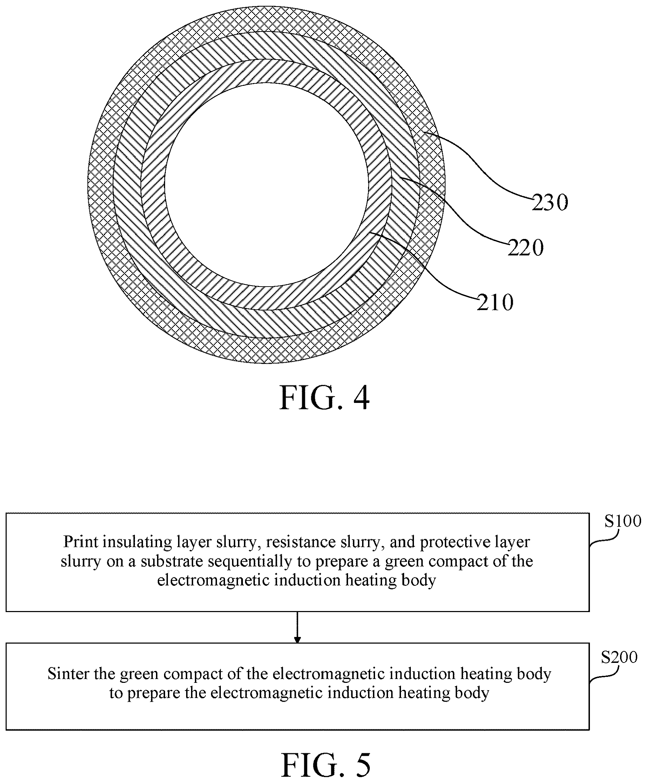

Referring to FIG. 4, in another embodiment, a substrate 210 is in a shape of a tube, an insulating layer 220 is stacked on an outer surface of the tubular substrate 210, and a temperature sensing layer 230 is stacked on a surface on a side of the insulating layer 220 away from the substrate 210. When the substrate 210 is in the shape of a tube, the electromagnetic induction heating element 10 is also substantially in a shape of a tube. In use, the atomizing medium is placed in the substrate 210, the coil surrounds the outside of the electromagnetic induction heating element 10, and the electromagnetic induction heating element 10 is arranged between the atomizing medium and the coil. Certainly, a thickness and a material of the substrate 210 may have a same selection range as the substrate 110, a thickness and a material of the insulating layer 220 may have a same selection range as the insulating layer 120, and a thickness and a material of the temperature measuring layer 230 may also have a same selection range as the temperature measuring layer 130.

In one of the embodiments, a thickness of the substrate 110 ranges from 0.1 mm to 1 mm. Certainly, in some other embodiments, the thickness of the substrate 110 is not limited to the foregoing, and may also be adjusted according to actual requirements.

Referring to FIG. 1 and FIG. 3, the insulating layer 120 is arranged on the substrate 110, and provides functions of insulation and heat conduction. In an embodiment, a material of the insulating layer 120 is a glass glaze layer with an expansion coefficient ranging from 9×10⁻⁶(1/K) to 13×10⁻⁶(1/K). Certainly, the material of the insulating layer 120 is not limited to the glass glaze layer with an expansion coefficient ranging from 9×10⁻⁶(1/K) to 13×10⁻⁶(1/K). In some other embodiments, the material of the insulating layer 120 may also be another material with the functions of insulation and heat conduction.

In one of the embodiments, the insulating layer 120 is in a shape of a sheet. In the illustrated embodiment, the shape of the insulating layer 120 is the same as the shape of the substrate 110. The substrate 110 has a first surface 111 and a second surface 112 opposite to the first surface 111, and the insulating layer 120 includes a first insulating layer 121 and a second insulating layer 122. The first insulating layer 121 is arranged on the first surface 111, and the second insulating layer 122 is arranged on the second surface 112.

In one of the embodiments, a thickness of the insulating layer 120 ranges from 10 µm to 300 µm. In other embodiments, a thickness of the insulating layer 120 ranges from 30 µm to 200 µm. It may be understood that, in other embodiments, the thickness of the insulating layer 120 is not limited to the foregoing, and may also be adjusted according to actual requirements.

The temperature sensing layer 130 is arranged on the insulating layer 120, and is configured to measure the temperature of the electromagnetic induction heating element 10. The temperature sensing layer 130 includes a temperature measuring circuit 131 and a connecting circuit 132 electrically connected to the temperature measuring circuit 131. The temperature measuring circuit 131 is configured to measure the temperature of the electromagnetic induction heating element 10, and is formed by sintering resistance slurry. The connecting circuit 132 is configured to connect the temperature measuring circuit 131 and a power source to supply power to the temperature measuring circuit 131.

In one of the embodiments, the temperature sensing layer 130 is arranged in a region on the insulating layer 120 corresponding to the coil, and a region without magnetic field has no temperature measuring circuit 131. That is, the temperature measuring circuit 131 is correspondingly arranged in a heating region of the electromagnetic induction heating element 10, and no temperature measuring circuit 131 is provided in a non-heating region, so as to save materials. In some embodiments, the temperature measuring circuit 131 is arranged on a partial surface of the first insulating layer 121. In the illustrated embodiment, the temperature measuring circuit 131 is substantially U-shaped. Certainly, in other embodiments, the shape of the temperature measuring circuit 131 is not limited to the foregoing, and may also be another shape, for example, a Z shape.

In one of the embodiments, a sheet resistance of the temperature measuring circuit 131 ranges from 1 Ω/sq to 5 Ω/sq, and a temperature coefficient of resistance of the temperature measuring circuit 131 ranges from 300 ppm/°C to 3500 ppm/°C. In other embodiments, a sheet resistance of the temperature measuring circuit 131 ranges from 2 Ω/sq to 4 Ω/sq, and a temperature coefficient of resistance of the temperature measuring circuit 131 ranges from 700 ppm/°C to 2000 ppm/°C.

In an embodiment, the resistance slurry for preparing the temperature measuring circuit 131 includes organic carrier, inorganic adhesive, and conductive agent. In parts by mass, the resistance slurry includes 10 to 20 parts of organic carrier, 30 to 45 parts of inorganic adhesive, and 30 to 50 parts of conductive agent. The inorganic adhesive includes glass powder, and the conductive agent is selected from at least one of silver and palladium. The sheet resistance of the temperature measuring circuit 131 prepared according to the resistance slurry ranges from 1 Ω/sq to 5 Ω/sq, and the temperature coefficient of resistance ranges from 300 ppm/°C to 3500 ppm/°C, which can more accurately and timely reflect the temperature on the heating element performing electromagnetic heating.

In one of the embodiments, the organic carrier is selected from at least one of terpineol, ethylcellulose, butyl carbitol, polyvinyl butyral, tributyl citrate, and polyamide wax.

In one of the embodiments, the organic carrier consists of the terpineol, the ethylcellulose, the butyl carbitol, the polyvinyl butyral, the tributyl citrate, and the polyamide wax. Using a mixture of the terpineol, the ethylcellulose, the butyl carbitol, the polyvinyl butyral, the tributyl citrate, and the polyamide wax as the organic carrier, the inorganic adhesive and the conductive agent can be mixed uniformly. In an embodiment, in mass percentage, the organic carrier includes 50% to 70% of the terpineol, 2% to 10% of the ethylcellulose, 10% to 30% of the butyl carbitol, 1% to 5% of the polyvinyl butyral, 4% to 10% of the tributyl citrate, and 0.1% to 1% of the polyamide wax. In another embodiment, in mass percentage, the organic carrier includes 60% to 70% of the terpineol, 3% to 7% of the ethylcellulose, 15% to 25% of the butyl carbitol, 1% to 4% of the polyvinyl butyral, 4% to 8% of the tributyl citrate, and 0.1% to 0.5% of the polyamide wax.

In one of the embodiments, in parts by mass, the parts of the organic carrier range from 15 to 20. Further, the parts of the organic carrier range from 15 to 18.

In one of the embodiments, the inorganic adhesive includes glass powder with a melting point ranging from 700°C to 780°C. In an embodiment, in mass percentage, the glass powder with the melting point ranging from 700°C to 780°C includes 20% to 35% of SiO₂, 1% to 10% of Al₂O₃, 5% to 15% of CaO, 10% to 20% of BaO, 1% to 15% of ZnO, 25% to 40% of B₂O₃, and 1% to 10% of TiO₂. In another embodiment, the glass powder with the melting point ranging from 700°C to 780°C includes 20% to 35% of SiO₂, 1% to 10% of Al₂O₃, 5% to 15% of CaO, 10% to 20% of BaO, 1% to 15% of ZnO, 25% to 40% of B₂O₃, and 1% to 10% of TiO₂.

In one of the embodiments, the inorganic adhesive includes glass powder with a melting point ranging from 700°C to 780°C. When the inorganic adhesive is the glass powder with the melting point ranging from 700°C to 780°C, the temperature measuring circuit can be formed by sintering in a low temperature, which is close to the sintering temperature of the insulating layer. In another embodiment, the inorganic adhesive is glass powder with a melting point ranging from 720°C to 780°C. Certainly, in other embodiments, the inorganic adhesive is not limited to glass powder, and may also be other materials.

In one of the embodiments, in parts by mass, the parts of the inorganic adhesive range from 35 to 45. In another embodiment, in parts by mass, the parts of the inorganic adhesive range from 35 to 40.

In one of the embodiments, the conductive agent is a mixture of silver and palladium, where a mass ratio of the silver to the palladium is (0.1 to 1): (99.9 to 99). In another embodiment, the mass ratio of the silver to the palladium is (0.5 to 0.8): (99.5 to 99.2)

In this embodiment, the conductive agent is powder.

In one of the embodiments, in parts by mass, the parts of the conductive agent range from 40 to 50. In another embodiment, in parts by mass, the parts of the conductive agent range from 45 to 50.

In one of the embodiments, the resistance slurry consists of organic carrier, inorganic adhesive, and conductive agent. In parts by mass, the parts of the organic carrier range from 10 to 20, the parts of the inorganic adhesive range from 30 to 45, and the parts of the conductive agent range from 30 to 50. In another embodiment, the parts of the organic carrier range from 15 to 18, the parts of the inorganic adhesive range from 35 to 40, and the parts of the conductive agent range from 45 to 50.

In one of the embodiments, the resistance slurry includes organic carrier, inorganic adhesive, and conductive agent. In parts by mass, the parts of the organic carrier range from 15 to 20, the parts of the inorganic adhesive range from 35 to 45, and the parts of the conductive agent range from 40 to 50. In another embodiment, the parts of the organic carrier range from 15 to 18, the parts of the inorganic adhesive range from 35 to 40, and the parts of the conductive agent range from 45 to 50.

In one of the embodiments, the mass ratio of the inorganic adhesive to the conductive agent is (5 to 9): (6 to 10). Preparing the organic carrier, the inorganic adhesive, and the conductive agent in the resistance slurry according to the foregoing ratio, the temperature measuring circuit can have better temperature coefficient of resistance (TCR) characteristics.

In one of the embodiments, the sintering temperature of temperature measuring circuit ranges from 700°C to 900°C. In another embodiment, the sintering temperature ranges from 800°C to 900°C.

In one of the embodiments, a thickness of the temperature measuring circuit 131 ranges from 10 µm to 300 µm. Certainly, in some other embodiments, the temperature measuring circuit 131 is not limited to the foregoing, and may also be adjusted according to actual requirements.

Certainly, the material of the connecting circuit 132 is not particularly limited, as long as it can conduct electricity. A thickness of the connecting circuit 132 ranges from 50 µm to 500 µm. Certainly, in some other embodiments, the connecting circuit 132 is not limited to the foregoing, and may also be adjusted according to actual requirements.

In one of the embodiments, the electromagnetic induction heating element 10 further includes a protective layer 140, which has an insulation function. In an embodiment, a material of the protective layer 140 is glass. In some embodiments, the protective 140 further has an anti-adhesive property for reducing adhesion of the atomizing medium.

In one of the embodiments, a thickness of the protective layer 140 ranges from 10 µm to 200 µm. Certainly, in some other embodiments, the thickness of the protective layer 140 is not limited to the foregoing, and may also be adjusted according to actual requirements.

In the embodiment shown in the figure, the protective layer 140 includes a first protective layer 141 and a second protective layer 142. The first protective layer 141 is arranged on the temperature sensing layer 130, and the second protective layer 142 is arranged on the second insulating layer 122. Certainly, in some other embodiments, the temperature sensing layer 130 may be also arranged on the second insulating layer 122, and in this case, the protective layer 140 is arranged on the temperature sensing layer 130.

The electromagnetic induction heating element 10 includes the substrate 110, the insulating layer 120 arranged on the substrate 110, and the temperature sensing layer 130 arranged on the insulating layer 120. The material of the substrate 110 is metal. The temperature sensing layer 130 includes the temperature measuring circuit 131 formed by sintering the resistance slurry, the sheet resistance of the temperature measuring circuit 131 ranges from 1 Ω/sq to 5 Ω/sq, and the temperature coefficient of resistance ranges from 300 ppm/°C to 3500 ppm/°C, so that the temperature on the electromagnetic induction heating element 10 performing electromagnetic heating can be accurately and timely reflected. In addition, a conventional heating element generates heat by resistance, which requires supplying a high current to a heating circuit and detecting a feedback current simultaneously, which has a large error. Compared with the conventional heating element, a circuit for testing the temperature and a circuit for heating of the electromagnetic induction heating element 10 are set independently of each other to avoid mutual interference, and the temperature measuring circuit 131 only needs a low current to form a current loop.

An embodiment of this application further provides a method for preparing the electromagnetic induction heating element, the method includes:
Step S100: print insulating layer slurry, resistance slurry, and protective layer slurry on a substrate sequentially to prepare a green body of the electromagnetic induction heating element.

Specifically, the insulating layer slurry is printed on the substrate, and dried and shaped to produce a first substrate; then the resistance slurry is printed on the first green body, and dried and shaped to produce a second substrate; and then the protective layer slurry is printed on the second substrate, and dried to obtain the green body of the electromagnetic induction heating element.

Certainly, in some other embodiments, the insulating layer slurry, the resistance slurry, and the protective layer slurry may also be printed on the substrate sequentially, and dried to prepare the green body of the electromagnetic induction heating element. It should be noted that, the resistance slurry is described as above, and details are not described herein again; and the insulating layer slurry and the protective layer slurry may be selected correspondingly according to the materials of the foregoing insulating layer and the foregoing protective layer that need to be prepared.

Step S200: sintering the green body of the electromagnetic induction heating element to prepare the electromagnetic induction heating element.

In one of the embodiments, a sintering temperature ranges from 700°C to 900°C. In another embodiment, the sintering temperature ranges from 800°C to 900°C. The green body of the electromagnetic induction heating element is sintered according to the foregoing sintering temperature. With a lower sintering temperature, less harmful substances may be produced during sintering of the electromagnetic induction heating element.

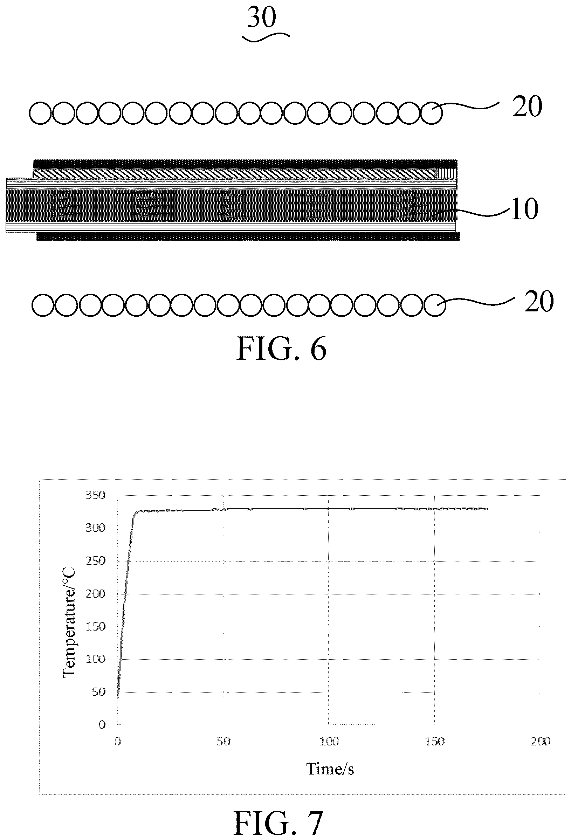

Referring to FIG. 6, an embodiment of this application further provides a heating device that uses electromagnetic induction to heat. In this embodiment, the heating device includes an electromagnetic induction heating element component 30, a base, and an adjusting and controlling module. The electromagnetic induction heating element component 30 includes the electromagnetic induction heating element 10 and a coil 20 surrounding the outside of the electromagnetic induction heating element and configured to generate a magnetic field. The electromagnetic induction heating element 10 is mounted on the base. The adjusting and controlling module is configured to adjust a heating temperature, and the substrate of the electromagnetic induction heating element 10 is configured to induce the magnetic field generated by the coil 20 and generate an electric current.

In an embodiment, the electromagnetic induction heating element 10 is in a shape of a sheet, and an end of the electromagnetic induction heating element 10 is mounted on the base.

During use of the heating device, the atomizing medium is in contact with the electromagnetic induction heating element 10, so that the electromagnetic induction heating element 10 heats the atomizing medium. In an embodiment, in a case that the electromagnetic induction heating element 10 is in a shape of a sheet, the atomizing medium is inserted onto the electromagnetic induction heating element 10, and the coil 20 is arranged outside the atomizing medium, so that the electromagnetic induction heating element 10 induces the magnetic field generated by the coil 20 and generates heat to heat the atomizing medium inserted onto the electromagnetic induction heating element 10. In another embodiment, in a case that the electromagnetic induction heating element 10 is in a shape of a tube, the atomizing medium is placed inside a tubular substrate of the electromagnetic induction heating element 10, and the coil 20 is arranged outside the electromagnetic induction heating element 10, so that the electromagnetic induction heating element 10 induces the magnetic field generated by the coil 20 and generates heat to heat the atomizing medium inside the electromagnetic induction heating element 10.

The foregoing heating device has the electromagnetic induction heating element 10 that can accurately and timely reflect the temperature of the electromagnetic induction heating element, so that the heating device can adjust the heating temperature according to the temperature reflected by the temperature sensing layer, so that the heating device can heat more uniformly, and adjust and control heating more timely and accurately, thereby improving user experience.

### Specific Embodiments

Detailed descriptions are provided below with reference to specific embodiments. Medicines and instruments used in the embodiments are conventional selection in the art unless otherwise specified. Experimental methods for which specific conditions are not indicated in the embodiments are implemented according to conventional conditions, such as conditions described in literatures or books or methods recommended by manufacturers. Parts in the following embodiments are all parts by mass.

### Embodiment 1

A structure of an electromagnetic induction heating element of Embodiment 1 is shown in FIG. 1. The electromagnetic induction heating element of Embodiment 1 consists of a substrate, a first insulating layer, a second insulating layer, a temperature sensing layer, a first protective layer, and a second protective layer. The substrate is in a shape of a sheet, and has a first surface and a second surface opposite to the first surface. The first insulating layer is arranged on the first surface, the second insulating layer is arranged on the first surface, the temperature sensing layer is arranged on the first insulating layer, the first protective layer is arranged on the temperature sensing layer, and the second protective layer is arranged on the second insulating layer. A thickness of the substrate is 0.5 mm, a thickness of the first insulating layer is 200 µm, a thickness of the second insulating layer is 200 µm, a thickness of the temperature sensing layer is 150 µm, a thickness of the first protective layer is 100 µm, and a thickness of the second protective layer is 100 µm.

A material of the substrate is 430 stainless steel; and both materials of the first insulating layer and the second insulating layer are a glass glaze layer with an expansion coefficient of 9×10⁻⁶(1/K), where the first insulating layer and the second insulating layer are formed by sintering insulating layer slurry at a sintering temperature of 800°C. A sheet resistance of a temperature measuring circuit of the temperature sensing layer is 1.2±0.1 Ω /sq, a resistance value is greater than 20Ω, and a temperature coefficient of resistance of the temperature measuring circuit is 3300±50 ppm/°C; and the temperature measuring circuit is formed by sintering resistance slurry at a temperature of 800°C, the resistance slurry includes 16 parts of organic carrier, 36 parts of inorganic adhesive, and 48 parts of conductive agent, where: in mass percentage, the organic carrier includes 64% of terpineol, 4.8% of ethylcellulose, 24% of butyl carbitol, 2% of polyvinyl butyral, 5% of tributyl citrate, and 0.2% of polyamide wax; the inorganic adhesive is glass powder, in mass percentage, the glass powder includes 30% of SiO₂, 5% of Al₂O₃, 8% of CaO, 16% of BaO, 5% of ZnO, 32% of B₂O₃, and 4% of TiO₂, and a melting point of the inorganic adhesive is 710°C; and the conductive agent includes silver powder and palladium powder, and a mass ratio of the silver powder to the palladium powder is 99.2: 0.8.

Both materials of the first protective layer and the second protective layer are the glass glaze layer with the expansion coefficient of 9×10⁻⁶(1/K), and are formed by sintering protective layer slurry at a sintering temperature of 800°C.

### Embodiment 2

A structure of an electromagnetic induction heating element of Embodiment 2 is shown in FIG. 1. The electromagnetic induction heating element of Embodiment 2 consists of a substrate, a first insulating layer, a second insulating layer, a temperature sensing layer, a first protective layer, and a second protective layer. The substrate is in a shape of a sheet, and has a first surface and a second surface opposite to the first surface. The first insulating layer is arranged on the first surface, the second insulating layer is arranged on the first surface, the temperature sensing layer is arranged on the first insulating layer, the first protective layer is arranged on the temperature sensing layer, and the second protective layer is arranged on the second insulating layer. A thickness of the substrate is 0.5 mm, a thickness of the first insulating layer is 200 µm, a thickness of the second insulating layer is 200 µm, a thickness of the temperature sensing layer is 150 µm, a thickness of the first protective layer is 100 µm, and a thickness of the second protective layer is 100 µm.

A material of the substrate is 430 stainless steel; and both materials of the first insulating layer and the second insulating layer are a glass glaze layer with an expansion coefficient of 9×10⁻⁶(1/K), where the first insulating layer and the second insulating layer are formed by sintering insulating layer slurry at a sintering temperature of 800°C. A sheet resistance of a temperature measuring circuit of the temperature sensing layer is 2.5±0.3 Ω /sq, and a temperature coefficient of resistance of the temperature measuring circuit is 3200±50 ppm/°C; and the temperature measuring circuit is formed by sintering resistance slurry at a temperature of 800°C, the resistance slurry includes 16 parts of organic carrier, 40 parts of inorganic adhesive, and 44 parts of conductive agent, where: in mass percentage, the organic carrier includes 70% of terpineol, 4.2% of ethylcellulose, 20% of butyl carbitol, 1.6% of polyvinyl butyral, 4% of tributyl citrate, and 0.2% of polyamide wax; the inorganic adhesive is glass powder, in mass percentage, the glass powder includes 28% of SiO₂, 8% of Al₂O₃, 8% of CaO, 14% of BaO, 7% of ZnO, 30% of B₂O₃, and 5% of TiO₂, and a melting point of the inorganic adhesive is 730°C; and the conductive agent includes silver powder and palladium powder, and a mass ratio of the silver powder to the palladium powder is 99: 1.

Both materials of the first protective layer and the second protective layer are the glass glaze layer with the expansion coefficient of 9×10⁻⁶(1/K), and are formed by sintering protective layer slurry at a sintering temperature of 800°C.

### Embodiment 3

A structure of an electromagnetic induction heating element of Embodiment 3 is shown in FIG. 1. The electromagnetic induction heating element of Embodiment 3 consists of a substrate, a first insulating layer, a second insulating layer, a temperature sensing layer, a first protective layer, and a second protective layer. The substrate is in a shape of a sheet, and has a first surface and a second surface opposite to the first surface. The first insulating layer is arranged on the first surface, the second insulating layer is arranged on the first surface, the temperature sensing layer is arranged on the first insulating layer, the first protective layer is arranged on the temperature sensing layer, and the second protective layer is arranged on the second insulating layer. A thickness of the substrate is 0.5 mm, a thickness of the first insulating layer is 200 µm, a thickness of the second insulating layer is 200 µm, a thickness of the temperature sensing layer is 150 µm, a thickness of the first protective layer is 100 µm, and a thickness of the second protective layer is 100 µm.

A material of the substrate is 430 stainless steel; and both materials of the first insulating layer and the second insulating layer are a glass glaze layer with an expansion coefficient of 9×10⁻⁶(1/K), where the first insulating layer and the second insulating layer are formed by sintering insulating layer slurry at a sintering temperature of 800°C. A sheet resistance of a temperature measuring circuit of the temperature sensing layer is 1.2±0.1 Ω /sq, and a temperature coefficient of resistance of the temperature measuring circuit is 3300±50 ppm/°C; and the temperature measuring circuit is formed by sintering resistance slurry at a temperature of 800°C, the resistance slurry includes 10 parts of organic carrier, 45 parts of inorganic adhesive, and 45 parts of conductive agent, where: in mass percentage, the organic carrier includes 64% of terpineol, 4.8% of ethylcellulose, 24% of butyl carbitol, 2% of polyvinyl butyral, 5% of tributyl citrate, and 0.2% of polyamide wax; the inorganic adhesive is glass powder, in mass percentage, the glass powder includes 30% of SiO₂, 5% of Al₂O₃, 8% of CaO, 16% of BaO, 5% of ZnO, 32% of B₂O₃, and 4% of TiO₂, and a melting point of the inorganic adhesive is 710°C; and the conductive agent includes silver powder and palladium powder, and a mass ratio of the silver powder to the palladium powder is 99.2: 0.8.

Both materials of the first protective layer and the second protective layer are the glass glaze layer with the expansion coefficient of 9×10⁻⁶(1/K), and are formed by sintering protective layer slurry at a sintering temperature of 800°C.

### Embodiment 4

A structure of an electromagnetic induction heating element of Embodiment 4 is shown in FIG. 1. The electromagnetic induction heating element of Embodiment 4 consists of a substrate, a first insulating layer, a second insulating layer, a temperature sensing layer, a first protective layer, and a second protective layer. The substrate is in a shape of a sheet, and has a first surface and a second surface opposite to the first surface. The first insulating layer is arranged on the first surface, the second insulating layer is arranged on the first surface, the temperature sensing layer is arranged on the first insulating layer, the first protective layer is arranged on the temperature sensing layer, and the second protective layer is arranged on the second insulating layer. A thickness of the substrate is 0.5 mm, a thickness of the first insulating layer is 200 µm, a thickness of the second insulating layer is 200 µm, a thickness of the temperature sensing layer is 150 µm, a thickness of the first protective layer is 100 µm, and a thickness of the second protective layer is 100 µm.

A material of the substrate is 430 stainless steel; and both materials of the first insulating layer and the second insulating layer are a glass glaze layer with an expansion coefficient of 9×10⁻⁶(1/K), where the first insulating layer and the second insulating layer are formed by sintering insulating layer slurry at a sintering temperature of 800°C. A sheet resistance of a temperature measuring circuit of the temperature sensing layer is 1.2±0.1 Ω /sq, and a temperature coefficient of resistance of the temperature measuring circuit is 3300±50 ppm/°C; and the temperature measuring circuit is formed by sintering resistance slurry at a temperature of 800°C, the resistance slurry includes 20 parts of organic carrier, 30 parts of inorganic adhesive, and 50 parts of conductive agent, where: in mass percentage, the organic carrier includes 64% of terpineol, 4.8% of ethylcellulose, 24% of butyl carbitol, 2% of polyvinyl butyral, 5% of tributyl citrate, and 0.2% of polyamide wax; the inorganic adhesive is glass powder, in mass percentage, the glass powder includes 30% of SiO₂, 5% of Al₂O₃, 8% of CaO, 16% of BaO, 5% of ZnO, 32% of B₂O₃, and 4% of TiO₂, and a melting point of the inorganic adhesive is 710°C; and the conductive agent includes silver powder and palladium powder, and a mass ratio of the silver powder to the palladium powder is 99.2: 0.8.

Both materials of the first protective layer and the second protective layer are the glass glaze layer with the expansion coefficient of 9×10⁻⁶(1/K), and are formed by sintering protective layer slurry at a sintering temperature of 800°C.

### Embodiment 5

A structure of an electromagnetic induction heating element of Embodiment 5 is shown in FIG. 1. The electromagnetic induction heating element of Embodiment 5 consists of a substrate, a first insulating layer, a second insulating layer, a temperature sensing layer, a first protective layer, and a second protective layer. The substrate is in a shape of a sheet, and has a first surface and a second surface opposite to the first surface. The first insulating layer is arranged on the first surface, the second insulating layer is arranged on the first surface, the temperature sensing layer is arranged on the first insulating layer, the first protective layer is arranged on the temperature sensing layer, and the second protective layer is arranged on the second insulating layer. A thickness of the substrate is 0.5 mm, a thickness of the first insulating layer is 200 µm, a thickness of the second insulating layer is 200 µm, a thickness of the temperature sensing layer is 150 µm, a thickness of the first protective layer is 100 µm, and a thickness of the second protective layer is 100 µm.

A material of the substrate is 430 stainless steel; and both materials of the first insulating layer and the second insulating layer are a glass glaze layer with an expansion coefficient of 9×10⁻⁶(1/K), where the first insulating layer and the second insulating layer are formed by sintering insulating layer slurry at a sintering temperature of 800°C. A sheet resistance of a temperature measuring circuit of the temperature sensing layer is 1.2±0.1 Ω /sq, and a temperature coefficient of resistance of the temperature measuring circuit is 3300±50 ppm/°C; and the temperature measuring circuit is formed by sintering resistance slurry at a temperature of 800°C, the resistance slurry includes 16 parts of organic carrier, 36 parts of inorganic adhesive, and 48 parts of conductive agent, where: in mass percentage, the organic carrier includes 64% of terpineol, 4.8% of ethylcellulose, 24% of butyl carbitol, 2% of polyvinyl butyral, 5% of tributyl citrate, and 0.2% of polyamide wax; the inorganic adhesive is glass powder, in mass percentage, the glass powder includes 30% of SiO₂, 5% of Al₂O₃, 8% of CaO, 16% of BaO, 5% of ZnO, 32% of B₂O₃, and 4% of TiO₂, and a melting point of the inorganic adhesive is 710°C; and the conductive agent includes silver powder and palladium powder, and a mass ratio of the silver powder to the palladium powder is 99.9: 0.1.

Both materials of the first protective layer and the second protective layer are the glass glaze layer with the expansion coefficient of 9×10⁻⁶(1/K), and are formed by sintering protective layer slurry at a sintering temperature of 800°C.

### Test

The electromagnetic induction heating element of each embodiment and comparative embodiment is placed in a coil magnetic field connected to an alternating current separately, and the temperature measuring circuit is connected to a current for testing. The electromagnetic induction heating element of each embodiment heats up over time, and a resistivity of the temperature measuring circuit changes with the temperature (the resistivity of the temperature measuring circuit is calculated according to a voltage and a current). A time-temperature curve of Embodiment 1 is shown in FIG. 7.

It can be seen from FIG. 7, the electromagnetic induction heating element prepared according to Embodiment 1 controls temperature through TCR, achieving precision with temperature fluctuation less than 2°C.

The technical features in the foregoing embodiments may be randomly combined. For concise description, not all possible combinations of the technical features in the embodiments are described. However, provided that combinations of the technical features do not conflict with each other, the combinations of the technical features are considered as falling within the scope described in this specification.

The foregoing embodiments merely express several embodiments of this application. The descriptions thereof are relatively specific and detailed, but should not be understood as a limitation to the scope of this application. It should be noted that, a person of ordinary skill in the art may still make various changes and improvements without departing from the idea of this application, which shall all fall within the protection scope of this application. Therefore, the protection scope of this application is subject to the appended claims.

## Claims

1. An electromagnetic induction heating element, comprising a substrate, an insulating layer arranged on the substrate, and a temperature sensing layer arranged on the insulating layer, wherein a material of the substrate is metal elementary substance or alloy, and the temperature sensing layer comprises a temperature measuring circuit formed by sintering resistance slurry.

2. The electromagnetic induction heating element according to claim 1, wherein a sintering temperature of the temperature measuring circuit ranges from 700°C to 900°C.

3. The electromagnetic induction heating element according to claim 1, wherein a sheet resistance of the temperature measuring circuit ranges from 1 Ω/sq to 5 Ω/sq, and a temperature coefficient of resistance of the temperature measuring circuit ranges from 300 ppm/°C to 3500 ppm/°C.

4. The electromagnetic induction heating element according to claim 1, wherein the material of the substrate is stainless steel.

5. The electromagnetic induction heating element according to claim 1, wherein the insulating layer is a glass glaze layer with an expansion coefficient ranging from 9×10⁻⁶(1/K) to 13×10⁻⁶(1/K).

6. The electromagnetic induction heating element according to any one of claims 1 to 5, wherein the electromagnetic induction heating element further comprises a protective layer arranged on the temperature sensing layer.

7. The electromagnetic induction heating element according to claim 6, wherein the substrate has a first surface and a second surface opposite to the first surface, the insulating layer comprises a first insulating layer and a second insulating layer, the protective layer comprises a first protective layer and a second protective layer, the first insulating layer, the temperature sensing layer, and the first protective layer are sequentially stacked on the first surface, and the second insulating layer and the second protective layer are sequentially stacked on the second surface.

8. The electromagnetic induction heating element according to claim 1, wherein a thickness of the substrate ranges from 0.1 mm to 1 mm.

9. The electromagnetic induction heating element according to claim 1, wherein a thickness of the insulating layer ranges from 10 µm to 300 µm.

10. The electromagnetic induction heating element according to claim 1, wherein a thickness of the temperature sensing layer ranges from 10 µm to 300 µm.

11. The electromagnetic induction heating element according to claim 1, wherein the substrate is in a shape of a sheet, a strip, a tube, a column, or a cone.

12. The electromagnetic induction heating element according to claim 1, wherein, in parts by mass, the resistance slurry comprises 10 to 20 parts of organic carrier, 30 to 45 parts of inorganic adhesive, and 30 to 50 parts of conductive agent, wherein the inorganic adhesive comprises glass powder, and the conductive agent is selected from at least one of silver and palladium.

13. The electromagnetic induction heating element according to claim 12, wherein the conductive agent is a mixture of the silver and the palladium, wherein a mass ratio of the silver to the palladium is (0.1 to 1): (99.9 to 99)

14. The electromagnetic induction heating element according to claim 12, wherein the inorganic adhesive comprises glass powder with a melting point ranging from 700°C to 780°C; and in mass percentage, the glass powder comprises 20% to 3 5% of SiO₂, 1% to 10% of Al₂O₃, 5% to 15% of CaO, 10% to 20% of BaO, 1% to 15% of ZnO, 25% to 40% of B₂O₃, and 1% to 10% of TiO₂.

15. The electromagnetic induction heating element according to claim 12, wherein the organic carrier is selected from at least one of terpineol, ethylcellulose, butyl carbitol, polyvinyl butyral, tributyl citrate, and polyamide wax.

16. The electromagnetic induction heating element according to any one of claims 12 to 15, wherein, in parts by mass, the parts of the organic carrier range from 15 to 20, the parts of the inorganic adhesive range from 35 to 45, and the parts of the conductive agent range from 40 to 50.

17. An electromagnetic induction heating element component, comprising the electromagnetic induction heating element according to any one of claims 1 to 16 and a coil surrounding the electromagnetic induction heating element for generating a magnetic field, wherein the substrate of the electromagnetic induction heating element is configured to induce the magnetic field and generate an electric current.

18. A method for preparing an electromagnetic induction heating element, comprising:
printing insulating layer slurry, resistance slurry, and protective layer slurry on a substrate sequentially to prepare a green body of the electromagnetic induction heating element; and
sintering the green body of the electromagnetic induction heating element to prepare the electromagnetic induction heating element.
